# EUROPÄISCHE PATENTSCHRIFT

(11) **EP 0 833 361 B1**
(45) Veröffentlichungstag und Bekanntmachung des Hinweises auf die Patenterteilung: **08.08.2001**
(21) Anmeldenummer: 96115576.9
(22) Anmeldetag: 27.09.1996
(51) Int. Cl.: H01J 9/38

(54) **Verfahren zur Herstellung von Farbbildröhren**
Method of making colour picture tubes
Procédé de fabrication de tubes-images couleurs

(43) Veröffentlichungstag der Anmeldung: 01.04.1998
(73) Patentinhaber: Matsushita Electronics (Europe) GmbH, 73730 Esslingen (DE)
(72) Erfinder: Beckerle, Heinz, 73061 Ebersbach (DE); Reidinger,Rolf, 73061 Ebersbach (DE)
(74) Vertreter: Grünecker, Kinkeldey, Stockmair & Schwanhäusser Anwaltssozietät

(56) Entgegenhaltungen:
- DE-A- 3 316 399
- FR-A- 2 570 827
- GB-A- 2 226 492
- PATENT ABSTRACTS OF JAPAN vol. 006, no. 164 (E-127), 27.August 1982 & JP 57 084547 A (HITACHI LTD), 26.Mai 1982,

## Beschreibung

Die Erfindung betrifft ein Verfahren zur Herstellung von Farbbildröhren.

Vor dem Verlöten von Frontschirm und Konus einer Farbbildröhre werden die Verbindungsflächen und die Wandinnenseite des Frontschirms von Graphitleitsuspension gereinigt. Bei dieser Reinigung ist immer die Gefahr vorhanden, die Beschichtung auf der Innenfläche des Frontschirms zu beschädigen.

Die Reinigungsprozesse werden üblicherweise während der Beschichtungsprozesse durchgeführt. Sinnvollerweise erfolgt die Reinigung zwischen dem Aufbringen der Graphitsuspension und dem Beschichten mit der ersten Phosphorschicht.

Ursprünglich wurde diese Reinigung mechanisch mit Pinsel, Bürste und einer Reinigungsflüssigkeit durchgeführt, wobei die Vorrichtung speziell an den Verlauf der Frontschirmränder angepaßt wurde. Eine Anpassung des Reinigungsverfahrens an neue Frontschirmformate (z.B. 16:9) oder andere Bildschirmgrößen war sehr aufwendig.

Tauchbäder, die zur Reinigung verwendet werden, haben den Vorteil, daß sie nicht immer wieder an unterschiedliche Frontschirmformate und Größen angepaßt werden müssen.

Tauchbad-Reinigungsverfahren sind aus JP-A-57 084547 und GB-A-2 226 492 bekannt.

Gute Reinigungsergebnisse lassen sich mit Flußsäuretauchbädern erzielen. Der am besten dafür geeignete Stoff ist Ammoniumbifluorid, da die entsprechende wässrige Lösung sowohl die Graphitleitsuspension entfernt als auch sicherheitstechnisch relativ ungefährlich ist. Ammoniumbifluorid wird daher von den meisten Herstellern von Farbbildröhren zur Entfernung der Graphitleitsuspension verwendet.

Bei der Reinigung der Verbindungsflächen und der Seiteninnenflächen des Frontschirms wird die Graphitleitsuspensionsschicht durch Spritzer beschädigt, wodurch Ausschußware entsteht.

Der Erfindung liegt die Aufgabe zugrunde, die Ausschußrate herabzusetzen.

Diese Aufgabe wird erfindungsgemäß durch die Merkmale des Anspruches 1 gelöst.

Zur Erhöhung der Viskosität wird bevorzugt ein Stoff verwendet, der wasserlöslich und hochmolekular ist und der nicht mit den anderen in der Reinigungsflüssigkeit enthaltenen Stoffen reagiert. Ein solcher Stoff hat den Vorteil, daß er nur die Viskosität der Reinigungsflüssigkeit erhöht, aber die Reinigungsfähigkeit der Flüssigkeit, insbesondere die Entfernung von Graphitleitsuspension, nicht beeinträchtigt.

Besonders vorteilhaft läßt sich für diesen Zweck der Stoff Polyvinylpyrrolidon (PVP) verwenden, der nicht nur die Reinigungswirkung nicht beeinträchtigt, sondern auch keinen neuen Stoff in den Herstellungsprozeß einführt, der nicht schon zuvor bei der Herstellung des Frontschirms verwendet wurde.

Besonders vorteilhaft zur Reinigung von Glasteilen von Graphitleitsuspension lassen sich Flußsäuren oder deren in Wasser gelösten Salze verwenden, wobei die Salzlösungen, normalerweise wird eine Ammoniumbifluorid-Lösung verwendet, einerseits die Graphitleitsuspension gut von Glasteilen entfernen und anderseits für den Menschen, insbesondere das Bedienpersonal, relativ ungefährlich sind.

Die oben geschilderten Vorteile lassen sich besonders vorteilhaft kombinieren, wenn man eine Reinigungsflüssigkeit verwendet, welche im wesentlichen die folgende Zusammensetzung aufweist: 8 % Ammoniumbifluorid, 3 % Polyvinylpyrrolidon und 89 % Wasser. Eine solche Reinigungsflüssigkeit weist sehr gute Reinigungseigenschaften auf, ist für den Menschen relativ ungefährlich, führt nur zu einer geringen Ausfallrate und ist zudem relativ preisgünstig.

Die Eintauchtiefe der Seitenflächen des Frontschirms (der Wannenseitenflächen) sollte mindestens dem 0,6-fachen des Abstandes der Frittfläche zur Schirminnenfläche betragen. Bei dieser Eintauchtiefe läßt sich mit einer erfindungsgemäßen Reinigungsflüssigkeit die geringste Fehlerrate und die größte Hochspannungsstabilität in der Verbindung von Frontschirm (Wanne) und Konus erzielen. Zusätzlich wird dadurch die Gefahr minimiert, daß störende Partikel aus dem Bereich der Pins in die Wanneninnenfläche gelangen (Flittergefahr).

Die Erfindung wird im folgenden anhand der Zeichnungen erläutert.

Es zeigen:
- Fig. 1: eine Schnittansicht der Anordnung zur Reinigung der Frittfläche und der Seitenfläche des Frontschirms;
- Fig. 2: ein Diagramm, das die Abhängigkeit der Anzahl der Störstellen von der Badviskosität angibt;
- Fig. 3: ein Diagramm, das die Abhängigkeit der Reinigungsgüte von der Badviskosität angibt;
- Fig. 4: ein Diagramm, das den optimalen Arbeitsbereich in Abhängigkeit von der Badviskosität angibt;
- Fig. 5: ein Diagramm, das die Anzahl der Störstellen in Abhängigkeit von der Eintauchtiefe angibt.

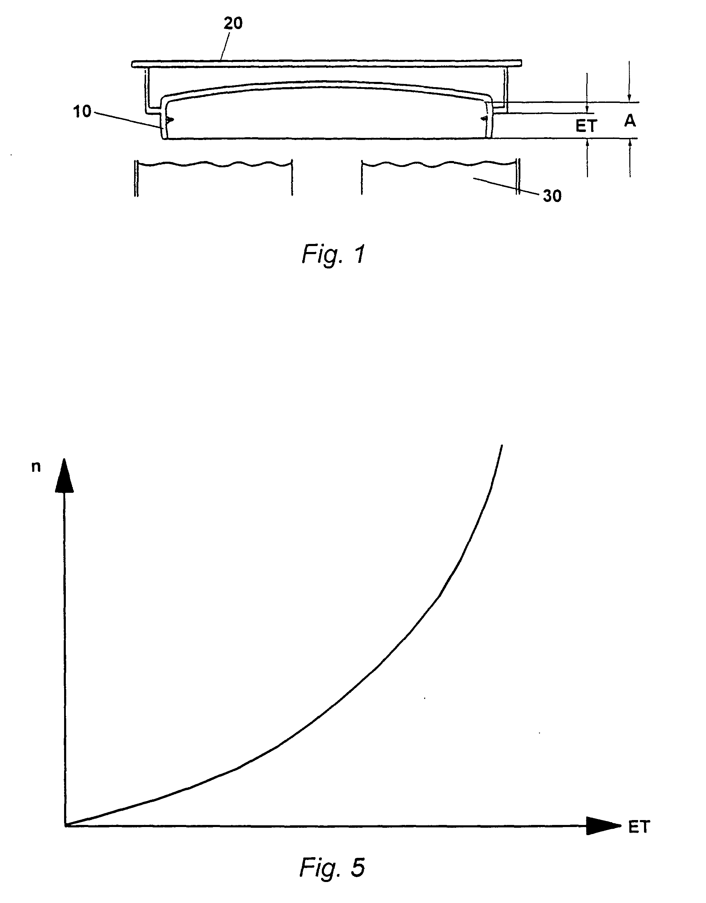

Eine Anordnung zur Reinigung der Verbindungsfläche (Frittfläche) und der Wandinnenseite des Frontschirms ist in Fig. 1 angegeben. Ein Schirm 10 wird von einer Halteeinrichtung 20 gehalten, um den Frontschirm 10 in die Reinigungsflüssigkeit 30 eintauchen zu können.

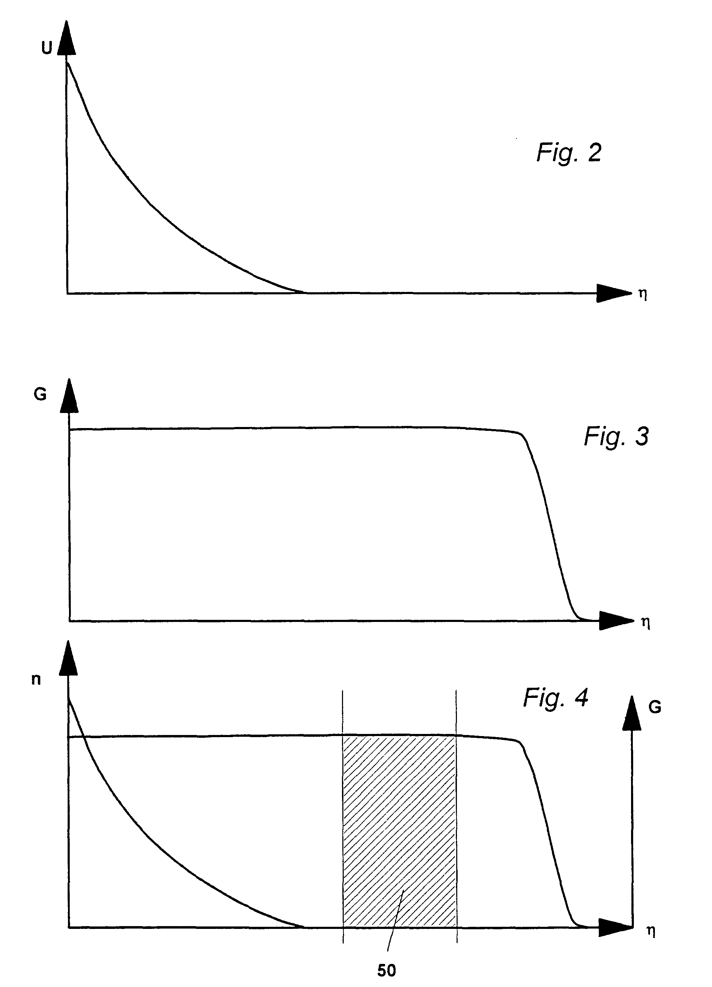

Zur Ermittlung der Parameter eines optimalen Reinigungsprozesses bei minimaler Ausfallrate wurde eine hohe Anzahl von Versuchen durchgeführt. Es hat sich dabei herausgestellt, daß eine Erhöhung der Viskosität der Reinigungsflüssigkeit (des Tauchbades) zu besonders vorteilhaften Ergebnissen führt. Die Versuchsergebnisse, die zur Festlegung eines optimalen Viskositätsbereiches geführt haben, werden anhand von Fig. 2, Fig. 3 und Fig. 4 beschrieben. In Fig. 2 ist die Abhängigkeit der Anzahl n der Störstellen von der Viskosität η der Reinigungsflüssigkeit dargestellt. Deutlich ist zu erkennen, daß mit einer Erhöhung der Viskosität der Reinigungsflüssigkeit die Anzahl der Störstellen im Frontschirm signifikant abnimmt. Um sicherzustellen, daß mit zunehmender Viskosität der Reinigungsflüssigkeit nicht auch die Güte der Reinigung abnimmt, wurde die Abhängigkeit der Reinigungsgüte von der Viskosität der Reinigungsflüssigkeit ermittelt (Fig. 3). Es zeigt sich, daß die Badviskosität problemlos zu erhöhen ist, negative Auswirkungen auf die Reinigungsgüte erst ab einem bestimmten Viskositätswert auftreten.

Aus den in Fig. 2 und Fig. 3 dargestellten funktionalen Zusammenhängen ergibt sich, daß ein optimaler Arbeitsbereich für die Viskosität der Reinigungsflüssigkeit in dem in Fig. 4 schraffiert dargestellten Bereich 50 liegt. Eine optimale Reinigungsqualität bei geringstmöglicher Anzahl von Störstellen ergibt sich dann, wenn - wie in Fig. 4 dargestellt - die untere Grenze des optimalen Viskositätsbereiches so festgelegt ist, daß die Anzahl der Störstellen auf ein Minimum abgesunken ist, und die obere Grenze so festgelegt ist, daß sich die Reinigungsgüte der verwendeten Reinigungsflüssigkeit noch auf einem möglichst hohen Niveau befindet. Der auf diese Weise ermittelte Bereich liegt zwischen 25 und 35 mPas bei 25° C.

Immer noch gute Ergebnisse werden erreicht, wenn man die Bereichsgrenzen für die Viskosität nur wenig erweitert, so daß die negativen Auswirkungen einer zunehmenden Anzahl von Störstellen und einer Verringerung der Reinigungsgüte kaum ins Gewicht fallen. In den durchgeführten Versuchen war das für einen Viskositätsbereich der Fall, der zwischen 15 mPas und 1000 mPas bei 25° C liegt.

Welche Viskosität für die Reinigungsflüssigkeit von Frontschirmen optimal ist, hängt wesentlich von der Eintauchtiefe des Frontschirmes, der Geschwindigkeit, mit der die Frontschirme in die Reinigungsflüssigkeit getaucht werden, und der Temperatur der Reinigungsflüssigkeit ab. Eine Abnahme der Ausfälle läßt sich schon bei einer Viskosität der Reinigungsflüssigkeit, die 5 mPas bei 25° C entspricht, beobachten. Werden die Frontschirme mit einer hohen Geschwindigkeit in die Reinigungsflüssigkeit eingetaucht, dann läßt sich auch mit einer Viskosität oberhalb von 1000 mPas (bei 25° C) kein Nachlassen der vorteilhaften Effekte beobachten. Bei einer mittleren Eintauchgeschwindigkeit der Frontschirme in die Reinigungsflüssigkeit liegt die obere Grenze der Viskosität für ein sehr gutes Ergebnis nach den durchgeführten Versuchen zwischen etwa 80 und 400 mPas (bei 25° C).

Zur Erhöhung der Viskosität der Reinigungsflüssigkeit sind alle wasserlöslichen, hochmolekularen Stoffe geeignet, die nicht mit den anderen in der Reinigungsflüssigkeit vorhandenen Stoffen, insbesondere dem aus sicherheitstechnischen Gründen vorteilhaften Ammoniumbifluorid, reagieren.

Es hat sich dabei als besonders vorteilhaft erwiesen, den Stoff Polyvinylpyrrolidon (PVP) zu verwenden, da auf diese Weise in den Herstellungsprozeß keine neuen Stoffe eingeführt werden.

Eine erfolgreich erprobte Variante für die Reinigungsflüssigkeit hat im wesentlichen folgende Zusammensetzung:
Ammoniumbifluorid 8 %,
Polyvinylpyrrolidon 3 %,
Wasser 89 %.

Im Zusammenhang mit der erhöhten Viskosität hat auch die Eintauchtiefe für die Anzahl der Störstellen eine wichtige Bedeutung. Deshalb wurde ermittelt, wie die Anzahl der Störstellen von der Eintauchtiefe der Seitenfläche des Frontschirmes abhängt. Das Ergebnis ist in Fig. 5 dargestellt. Es zeigt sich, daß mit zunehmender Eintauchtiefe ET die Anzahl der Störstellen deutlich zunimmt, ganz besonders, wenn die Eintauchtiefe größer als das 0,3-fache des Abstandes der Verbindungsfläche zur Schirminnenfläche ist. Andererseits nimmt die Hochspannungsstabilität der Verbindung von Wanne und Konus deutlich ab und die Flittergefahr deutlich zu, wenn die Eintauchtiefe kleiner als das 0,6-fache des Abstandes der Verbindungsfläche zur Schirminnenfläche ist. Ein idealer Kompromiß für die Eintauchtiefe scheint deshalb im Bereich des 0,6-fachen des Abstandes der Verbindungsfläche zur Schirminnenfläche zu liegen, bei dem bei ausreichender Hochspannungsstabilität und ausreichende niedriger Flittergefahr die Anzahl der Störstellen auf einem niedrigen Niveau bleibt.

## Patentansprüche

1. Verfahren zur Herstellung von Farbbildröhren, deren Glaskörper durch Verlöten eines Frontschirms und eines Konus hergestellt wird, wobei die Seiteninnenfläche und die Frittfläche des Frontschirms vor dem Verlöten durch Eintauchen in eine Reinigungsflüssigkeit gereinigt werden und die Reinigungsflüssigkeit eine Viskosität aufweist, die wenigstens 5 mPas bei 25° C entspricht.

2. Verfahren nach Anspruch 1, **dadurch gekennzeichnet,** daß die Reinigungsflüssigkeit zur Erhöhung der Viskosität einen Stoff enthält, der wasserlöslich ist, der hochmolekular ist und der nicht mit den anderen in der Reinigungsflüssigkeit enthaltenen Stoffen reagiert.

3. Verfahren nach einem der Ansprüche 1 und 2, **dadurch gekennzeichnet,** daß die Reinigungsflüssigkeit zur Erhöhung der Viskosität den Stoff Polyvinylpyrrolidon enthält.

4. Verfahren nach einem der Ansprüche 1 bis 3, **dadurch gekennzeichnet,** daß die Reinigungsflüssigkeit einen vorbestimmten Anteil wasserlöslicher Salze von Flußsäuren enthält.

5. Verfahren nach einem der Ansprüche 1 und 2, **dadurch gekennzeichnet,** daß die Reinigungsflüssigkeit im wesentlichen die folgende Zusammensetzung aufweist:
8 % Ammoniumbifluorid,
3 % Polyvinylpyrrolidon,
89 % Wasser.

6. Verfahren nach einem der Ansprüche 1 bis 5, **dadurch gekennzeichnet,** daß die Eintauchtiefe der Seitenfläche des Frontschirmes in die Reinigungsflüssigkeit mindestens dem 0,6-fachen des Abstandes der Frittfläche zur Schirminnenfläche beträgt.

## Claims

1. A method of producing colour picture tubes, the glass body of which is produced by soldering of a front screen and a cone, wherein the lateral inner surface and the frit surface of the front screen are cleaned prior to soldering by dipping in a cleaning fluid and the cleaning fluid has a viscosity corresponding to at least 5 mPas at 25 °C.

2. A method according to claim 1, **characterised in that,** to increase viscosity, the cleaning fluid contains a substance which is water-soluble, has a high molecular weight and does not react with the other substances contained in the cleaning fluid.

3. A method according to one of claims 1 and 2, **characterised in that,** to increase viscosity, the cleaning fluid contains the substance polyvinylpyrrolidone.

4. A method according to one of claims 1 to 3, **characterised in that** the cleaning fluid contains a predetermined proportion of water-soluble salts of hydrofluoric acids.

5. A method according to one of claims 1 and 2, **characterised in that** the cleaning fluid substantially comprises the following composition:
8 % ammonium bifluoride,
3 % polyvinylpyrrolidone,
89 % water.

6. A method according to one of claims 1 to 5, **characterised in that** the depth to which the lateral surface of the front screen is dipped into the cleaning fluid amounts to at least 0.6 times the distance between the frit surface and the screen inner surface.

## Revendications

1. Procédé de fabrication de tubes-images couleurs dont le corps est en verre est fabriqué par brasage d'un écran avant et d'un cône, la face intérieure latérale et la face de frittage de la face avant étant nettoyées avant brasage, par immersion dans un liquide de nettoyage, et le liquide de nettoyage ayant une viscosité correspondant à au moins 5 mPas à 25° C.

2. Procédé selon la revendication 1, caractérisé en ce que le liquide de nettoyage contient, pour augmenter la viscosité, une substance soluble dans l'eau, à haut poids moléculaire et ne réagissant pas avec les autres substances contenues dans le liquide de nettoyage.

3. Procédé selon l'une des revendications 1 et 2, caractérisé en ce que le liquide de nettoyage contient comme substance de la polyvinylpyrrolidone en vue d'augmenter la viscosité.

4. Procédé selon l'une des revendications 1 à 3, caractérisé en ce que le liquide de nettoyage contient une proportion prédéterminée de sels solubles dans l'eau, venant d'acides fluorhydriques.

5. Procédé selon l'une des revendications 1 et 2, caractérisé en ce que le liquide de nettoyage présente essentiellement la composition suivante :
8 % de bifluorure d'ammonium,
3 % de polyvinylpyrrolidone,
89 % d'eau.

6. Procédé selon l'une des revendications 1 à 5, caractérisé en ce que la profondeur d'immersion de la face latérale de l'écran avant dans le liquide de nettoyage est d'au moins 0,6 fois l'espacement entre la face de frittage et la face intérieure d'écran.
